# EUROPÄISCHE PATENTANMELDUNG

(11) **EP 4 067 425 A1**
(43) Veröffentlichungstag der Anmeldung: **05.10.2022**
(21) Anmeldenummer: 21166378.6
(22) Anmeldetag: 31.03.2021
(51) Int. Cl.: C08K 3/22, E04B 1/66, B32B 27/18, B32B 27/30, B32B 25/10

(54) **SCHWERENTFLAMMBARE ABDICHTFOLIE**

(71) Anmelder: Henkel AG & Co. KGaA, 40589 Düsseldorf (DE)
(72) Erfinder: Henning, Vito, 40667 Meerbusch (DE); Bauer, Alexander, 14612 Falkensee (DE); Feiler, Manfred, 37276 Meinhard-Schwebda (DE); Simonis, Udo, 63549 Ronneburg (DE)

(57) **Zusammenfassung**

Gegenstand der Erfindung ist eine Abdichtfolie, mit einer Tragschicht und mit einer von einer Seite aus oder von beiden Seiten aus auf die Tragschicht aufgebrachten Beschichtung, wobei die Beschichtung mindestens ein Polymer, mindestens ein Flammschutzmittel auf Antimonbasis, Aluminiumtrihydroxid und mindestens ein weiteres Metallhydroxid enthält, sowie die Verwendung dieser Abdichtfolie für den Bautenschutz, insbesondere im Fassadenbereich.

## Beschreibung

Gegenstand der Erfindung ist eine Abdichtfolie, mit einer Tragschicht und mit einer von einer Seite aus oder von beiden Seiten aus auf die Tragschicht aufgebrachten Beschichtung, wobei die Beschichtung mindestens ein Polymer, mindestens ein Flammschutzmittel auf Antimonbasis, Aluminiumtrihydroxid und mindestens ein weiteres Metallhydroxid enthält, sowie die Verwendung dieser Abdichtfolie für den Bautenschutz, insbesondere im Fassadenbereich.

Abdichtfolien für den Bautenschutz sind seit langem in vielen verschiedenen Ausführungsformen bekannt. Eine Abdichtfolie für den Bautenschutz, die als Fassadenfolie Verwendung findet (DE 200 23 324 U1), aber auch im Dachbereich eingesetzt wird, weist einen wasser- und luftdichten thermoplastischen Kunststoff oder ein Verbundmaterial aus Kunststoff und Aluminiumfolie als Mittellage auf. Darauf aufgebracht sind beidseitig überputzbare Außenlagen aus Vlies, Gewebe, Gewirke, etc. Diese sind gleichzeitig die Trägermaterialien (Substrate).

Bei den bekannten Abdichtfolien für den Bautenschutz wird dem Aspekt des erhöhten Brandschutzes nicht immer Beachtung geschenkt. Selbstverständlich ist jedoch für alle Abdichtfolien für den Bautenschutz stets auch der Brandschutz im Auge zu behalten.

Aufgrund von der Brände in England, wie Grenfel Tower, und regelmäßig wiederkehrenden Bränden in den Vereinigten Arabischen Emiraten wurden die Vorschriften hinsichtlich der Brandschutzanforderungen in diesen Ländern deutlich verschärft. So müssen die Abdichtungsbahnen/-folien heute eine entsprechende Brandklassifizierung aufweisen, um als Fassadenfolien, Tür- und Fensteranschlussbahnen eingesetzt werden zu können.

Somit ist es Aufgabe der vorliegenden Erfindung eine Abdichtfolie bereitzustellen, die die besonderen Erfordernisse hinsichtlich des Brandschutzes erfüllen, wie sie z.B. in der DIN EN 13501-1 aufgeführt werden, aber gleichzeitig die anderen Eigenschaften der Abdichtfolie, wie Verklebbarkeit, Verarbeitung oder Abdichteigenschaften, nicht negativ zu beeinflussen.

Die zuvor aufgezeigte Problematik wird gelöst durch eine Abdichtfolie, mit einer Tragschicht und mit einer von einer Seite aus oder von beiden Seiten aus auf die Tragschicht aufgebrachten Beschichtung, wobei die Beschichtung enthält:
a) mindestens ein Polymer, insbesondere PVC,
b) mindestens ein Flammschutzmittel auf Antimonbasis,
c) Aluminiumtrihydroxid und
d) mindestens ein weiteres Metallhydroxid, insbesondere Magnesiumhydroxid.

Eine entsprechende erfindungsgemäße Abdichtfolie weist sich insbesondere durch eine Schwerentflammbarkeit von mind. B-s3, d0 nach DIN EN 13501-1 aus. Dass diese hohe Brandschutzklasse erreicht werden kann, liegt vor allem an der besonderen Kombination des Antimonflammschutzmittels, des Aluminiumtrihydroxids und des weiteren Metallhydroxids. Diese vorteilhafte Eigenschaft kann insbesondere noch verstärkt werden, wenn als Polymer der Beschichtung Polyvinylchlorid (PVC) und/oder als Metallhydroxid Magnesiumhydroxid gewählt werden.

Neben den besonders hervorragenden Eigenschaften bezüglich des Brandverhaltens zeichnet sich die Folie zudem durch eine ausgezeichnete Wasserdichtigkeit und einer guten Verklebbarkeit aus. Durch die Tragschicht kann zudem eine gute Reißfestigkeit bei gleichzeitiger Flexibilität erreicht werden, weshalb die Verarbeitbarkeit der Abdichtfolie besonders gut ist.

Die erfindungsgemäße Abdichtfolie umfasst mindestens eine, insbesondere genau eine Tragschicht. Als Tragschicht kommen die dem Fachmann bekannten reißfesten und flexiblen Trägermaterial infrage, wie ein Vlies, Gewebe, Gewirke oder Gelege, insbesondere aus Kunstfasern oder Glasfasern, Kunststofffolien oder eine Metallfolie in Betracht. Je nach Anwendungszweck und gewünschtem Eigenschaftsprofil kommen entweder ein für Wasserdampf diffusionsoffenes Material, insbesondere ein Vlies, ein Gewebe, ein Gewirke oder ein Gelege, insbesondere aus Kunstfasern oder Glasfasern, bevorzugt ein Polyester (PES) Gewebe, oder ein für Wasserdampf diffusionsdichtes oder diffusionshemmendes Material, insbesondere eine Kunststofffolie oder eine Metallfolie, bevorzugt eine Polyesterfolie, in Betracht.

In einer bevorzugten Ausführungsform umfasst die Abdichtfolie mindestens eine, insbesondere genau eine Tragschicht aus einem PES Gewebe, insbesondere mit einem Flächengewicht von 10 bis 300 g/m², bevorzugter von 25 bis 250 g/m², am meisten bevorzugt von 70 bis 150 g/m².

Neben der Tragschicht umfasst die Abdichtfolie eine von einer Seite aus oder von beiden Seiten aus auf die Tragschicht aufgebrachten Beschichtung, insbesondere einer von einer Seite aus auf die Tragschicht aufgebrachten Beschichtung. Die Auftragung der Beschichtung kann in Form einer vorzugsweise wässrigen Dispersion erfolgen, wobei sich die fertige Beschichtung nach dem Trocknen der Dispersion bildet. Des Weiteren kann die Beschichtung auch als folienartige Beschichtung auf die Tragschicht aufgetragen werden, wobei durch die Auftragung, wie bei einer Extrusion, die Beschichtung untrennbar mit der Tragschicht verbunden wird. Bevorzugt wird die Beschichtung durch Extrusion auf die Tragschicht aufgebracht. Insbesondere im Falle von einen Trägermaterial aus Vlies, Gewebe, Gewirke oder Gelege bildet sich auf der Außenseite der Abdichtfolie eine Oberflächenrauhigkeit, die eine gute Grundlage für ein Überputzen und ein Verkleben an Mauerwerk und Fensterleibungen darstellt.

Die Beschichtung der Abdichtfolie, bzw. im Falle einer beidseitigen Beschichtung des Trägermaterials hat jede einzelne Beschichtung insbesondere ein Flächengewicht von 10 bis 500 g/m², bevorzugter von 100 bis 400 g/m², am meisten bevorzugt von 200 bis 300 g/m².

Im Folgenden werden die Bestandteile, aus denen die Beschichtung aufgebaut ist, näher ausgeführt.

Als einen wesentlichen Bestandteil enthält die Beschichtung mindestens ein Polymer. Als Polymer für die erfindungsgemäßen Folien kommt vor allem Polyvinylchlorid (PVC) in Betracht, aber auch andere thermoplastische Polymere und Polymergemische sind verwendbar, beispielsweise, aber nicht ausschließlich, Polyester, Polyolefine - insbesondere Polyethylene (PE) und Polypropylene (PP), Polyurethane (PU), Acrylnitril-Butadien-Styrol (ABS), Acrylnitril-Styrol-Acrylat (ASA).

Das mindestens eine Polymer ist bevorzugt PVC, beispielsweise S-PVC, vorzugsweise mit K-Werten im Bereich von 50 bis 90, insbesondere 60 bis 80, und S-PVC-Mischungen mit einem Modifier (Acrylat, Methyl-Butadien-Styrol). Besonders bevorzugt wird S-PVC mit einem K-Wert von zum Beispiel von 57, 60, 64, 65, 70, 75, oder 80 verwendet, ganz besonders bevorzugt ist S-PVC mit einem K-Wert von 70. Im Falle eines PVCs als Polymer werden die brandhemmenden Eigenschaften der Abdichtfolie weiter unterstützt.

Das mindestens eine Polymer ist in der Beschichtung insbesondere in einer Menge von 10 bis 70 Gew.-%, bevorzugter von 15 bis 50 Gew.-%, am meisten bevorzugt von 25 bis 40 Gew.-%, jeweils bezogen auf das Gesamtgewicht der Beschichtung, enthalten.

In einer besonders bevorzugten Ausführungsform enthält die Beschichtung PVC, insbesondere S-PVC, in einer Menge von 10 bis 70 Gew.-%, bevorzugter von 15 bis 50 Gew.-%, am meisten bevorzugt von 25 bis 40 Gew.-%, jeweils bezogen auf das Gesamtgewicht der Beschichtung.

Des Weiteren enthält die Beschichtung mindestens ein Flammschutzmittel auf Antimonbasis, wie Antimonoxide, insbesondere Antimontrioxid, Antimonpentaoxid oder Kombinationen davon. Das Flammschutzmittel auf Antimonbasis ist in der Beschichtung insbesondere in einer Menge von 1 bis 15 Gew.-%, bevorzugter von 3 bis 10 Gew.-%, jeweils bezogen auf das Gesamtgewicht der Beschichtung, enthalten.

Als weiteren Bestandteil enthält die Beschichtung Aluminiumtrihydroxid. Aluminiumtrihydroxid ist in der Beschichtung insbesondere in einer Menge von 1 bis 15 Gew.-%, bevorzugter von 3 bis 10 Gew.-%, jeweils bezogen auf das Gesamtgewicht der Beschichtung, enthalten.

Ferner enthält die Beschichtung mindestens ein weiteres Metallhydroxid. Diese Metallhydroxid ist vom bereits enthaltenden Aluminiumtrihydroxid unterschiedlich. Beispiele bevorzugter Metallhydroxide sind Alkali- und Erdalkalihydroxide, insbesondere Calciumhydroxid und Magnesiumhydroxid. In einer besonders bevorzugten Ausführungsform enthält die Beschichtung Magnesiumhydroxid. Das weitere Metallhydroxid unterstützt nicht nur die Brandeigenschaften der Abdichtfolie, sondern es unterstützt zudem die Bildung einer noch rauen Oberfläche der Beschichtung, wodurch zusätzlich die Verklebungs- und Überputzeigenschaften verbessert werden.

Das mindestens eine weitere Metallhydroxid, insbesondere das Magnesiumhydroxid, ist in der Beschichtung insbesondere in einer Menge von 1 bis 50 Gew.-%, bevorzugter von 5 bis 40 Gew.-%, am meisten bevorzugt von 10 bis 30 Gew.-%, jeweils bezogen auf das Gesamtgewicht der Beschichtung, enthalten.

Besonders bevorzugt enthält die Beschichtung zudem mindestens ein Weichmacher auf Phosphatbasis. Dabei können alle dem Fachmann bekannten Weichmacher auf Phosphatbasis eingesetzt werden. Insbesondere geeignet sind Phosphorsäureester, wie Trikresylphosphat, Triphenylphosphat, Diphenylkresylphosphat, Diphenyloctylphosphat, Tris(2-ethylhexyl)phosphat, Tris(2-butoxyethyl)phosphat, Diphenylisodecylphosphat, Diphenyl-2-ethylhexylphosphat, Isopropylphenyldiphenylphosphat und/oder tert.-Butylphenyldiphenylphosphat. Der zusätzliche Einsatz eines Weichmachers auf Phosphatbasis kann die brandhemmenden Eigenschaften der Abdichtfolie weiter positiv unterstützen und gleichzeitig die Flexibilität der Abdichtfolie verbessern.

Der mindestens ein Weichmacher auf Phosphatbasis, insbesondere ein Phosphorsäureester, ist in der Beschichtung insbesondere in einer Menge von 1 bis 15 Gew.-%, bevorzugter von 3 bis 10 Gew.-%, jeweils bezogen auf das Gesamtgewicht der Beschichtung, enthalten.

Ferner kann die Beschichtung zusätzliche polymere Weichmacher enthalten. Hierdurch kann die Flexibilität und die Verarbeitbarkeit der Beschichtung und damit der Abdichtfolie an die gewünschten Eigenschaften angepasst werden. Hierbei sind prinzipiell alle bekannten polymeren Weichmacher brauchbar, beispielsweise aber nicht ausschließlich, Polyadipate, Polyphthalate und oder Polyolester. Bevorzugt werden Polyolester als polymere Weichmacher eingesetzt. Der mindestens eine polymere Weichmacher, insbesondere ein Polyolester, ist in der Beschichtung insbesondere in einer Menge von 1 bis 40 Gew.-%, bevorzugter von 5 bis 30 Gew.-%, am meisten bevorzugt von 10 bis 25 Gew.-%, jeweils bezogen auf das Gesamtgewicht der Beschichtung, enthalten.

Des Weiteren kann die Beschichtung bevorzugt mindestens einen Stabilisator enthalten. Prinzipielle können alle bekannten Stabilisatoren für Polymer-Beschichtungen, insbesondere PVC-Beschichtungen eingesetzt werden, wie insbesondere Metall-Komplexe, Harnstoff-basierte Stabilisatoren und/oder epoxidierte Pflanzenöle. Bevorzugt enthält die Beschichtung als Stabilisator mindestens ein Metall-Komplex, wie ein Barium/Zink-Komplex, Stabilisatoren auf Zinn-Basis oder Calcium/Zink-Komplex, und/oder mindestens ein epoxidiertes Pflanzenöl, insbesondere eine Kombination von einem Metall-Komplex und einem epoxidierten Pflanzenöl. In einer anderen Ausführungsform kann es jedoch vorteilhaft sein, dass die Beschichtung kein epoxidiertes Pflanzenöl enthält.

Der mindestens eine Stabilisator, insbesondere die Kombination von einem Metall-Komplex und einem epoxidierten Pflanzenöl als Stabilisator, ist in der Beschichtung insbesondere in einer Menge von 0,5 bis 10 Gew.-%, bevorzugter von 1 bis 5 Gew.-%, jeweils bezogen auf das Gesamtgewicht der Beschichtung, enthalten.

Neben den genannten Bestandteilen kann die Beschichtung auch noch weitere dem Fachmann bekannte Additive, wie Pigmente, Verarbeitungsadditive oder Füllstoffe enthalten. Weitere Additive, insbesondere Pigmente, Verarbeitungsadditive oder Füllstoffe, sind in der Beschichtung insbesondere in einer Menge von 1 bis 30 Gew.-%, bevorzugter von 5 bis 20 Gew.-%, jeweils bezogen auf das Gesamtgewicht der Beschichtung, enthalten.

In einer bevorzugten Ausführungsform enthält die Beschichtung:
a) 10 - 70 Gew.-% mindestens eines Polymers, insbesondere eines PVCs,
b) 1 - 15 Gew.-% mindestens eines Flammschutzmittels auf Antimonbasis,
c) 1 - 15 Gew.-% Aluminiumtrihydroxid,
d) 1 - 50 Gew.-% mindestens eines weiteren Metallhydroxid, insbesondere Mg(OH)₂,
e) optional, insbesondere 1 - 15 Gew.-% mindestens eines Weichmachers auf Phosphatbasis,
f) optional, insbesondere 1 - 40 Gew.-% mindestens eines polymeren Weichmachers,
g) optional, insbesondere 0,5 - 10 Gew.-% mindestens eines Stabilisators und
h) optional, insbesondere 1 - 30 Gew.-% weitere Additive, wie Pigmente, Verarbeitungsadditive oder Füllstoffe.

Sofern nicht anders angegeben, beziehen sich die Angaben in Gew.-% jeweils auf das Gesamtgewicht der jeweiligen Zusammensetzung, wie in der gerade genannten Beschichtung auf das Gesamtgewicht der Beschichtung.

In einer besonders bevorzugten Ausführungsform enthält die Beschichtung:
a) 15 - 50 Gew.-%, insbesondere 25 - 40 Gew.-% mindestens eines PVCs,
b) 1 - 15 Gew.-%, insbesondere 3 - 10 Gew.-% mindestens eines Antimonoxids,
c) 1 - 15 Gew.-%, insbesondere 3 - 10 Gew.-% Aluminiumtrihydroxid,
d) 5 - 40 Gew.-%, insbesondere 10 - 30 Gew.-% Magnesiumhydroxid,
e) 1 - 15 Gew.-%, insbesondere 3 - 10 Gew.-% mindestens eines Weichmachers auf Phosphatbasis,
f) optional, insbesondere 1 - 40 Gew.-% mindestens eines polymeren Weichmachers,
g) optional, insbesondere 0,5 - 10 Gew.-% mindestens eines Stabilisators und
h) optional, insbesondere 1 - 30 Gew.-% weitere Additive, wie Pigmente, Verarbeitungsadditive oder Füllstoffe.

In einer bevorzugten Ausführungsform hat die Abdichtfolie ein Flächengewicht von 10 bis 3000 g/m², bevorzugter von 100 bis 1000 g/m², am meisten bevorzugt von 200 bis 500 g/m². Die Dicke der Abdichtfolie ist bevorzugt von 0,05 bis 2 mm, bevorzugter von 0,1 bis 1 mm, am meisten bevorzugt von 0,2 bis 0,5 mm.

Die Abdichtfolie kann Wasserdampf diffusionsoffen oder Wasserdampf diffussionssperrend ausgebildet sein. Die Wasserdampfdiffusion wird mit dem sd-Wert charakterisiert wird (gemessen nach DIN EN ISO 12572). Für den dampfbremsenden bzw. dampfsperrenden Bereich stehen sd-Wert > 5 m bis 150 m und für den diffusionsoffenen Bereich sd-Wert < 5 m. Der sd-Wert gibt dabei die Dicke einer Luftschicht an, die den gleichen Widerstand gegenüber Wasserdampfdiffusion wie der Werkstoff aufweist. Besonders bevorzugt ist die Abdichtfolie diffusionsoffen.

Bevorzugt ist die Abdichtfolie zudem nicht nur gegenüber Schlagregen dicht, sondern weist eine Wasserdichtigkeit gegen Wasserdruck von >2 bar/72 h, insbesondere >4 bar/72 h auf. Die Wasserdichtigkeit kann gemäß der DIN EN 1928 bestimmt werden. Dadurch können z. B. Anschlüsse an Abdichtungen (Flachdachabdichtung oder Bauwerksabdichtung) dauerhaft wasserdicht ausgebildet werden. Zusätzlich ergibt sich so eine Beständigkeit gegenüber stehendem Wasser z.B. unter der Fensterbank.

Die Abdichtfolie wird insbesondere für den Bautenschutz verwendet. Hierbei kann die Abdichtfolie sowohl als Fassadenfolie, aber auch im Dachbereich oder Fensterbereich eingesetzt werden. Hierbei ist insbesondere die Verwendung als Fassadenfolie, insbesondere als diffusionsoffene Fassadenfolie bevorzugt. Eine weitere besonders vorteilhafte Verwendung der erfindungsgemäßen Abdichtfolie besteht im Abdichten der Anschlüsse von unterhalb einer Dachkonstruktion angeordneten Dampfsperrfolien an die Außenwände, den Kamin und/oder sonstige Durchdringungen des Daches. In diesem Fall wird die Abdichtfolie in der wasserdampfdiffusionssperrenden Ausführung eingesetzt. Vorteilhaft ist außerdem die Verwendung der erfindungsgemäßen Abdichtfolie in der wasserdampfdiffusionssperrenden Ausführung als ganzflächige Abdichtung von Dächern zur Erzielung der Wind- und Luftdichtigkeit als Wasserdampfdiffusionsbremse bzw. -sperre.

### Beispiel:

Auf einer Tragschicht aus PES Gewebe (100 g/m²) wird die in der folgenden Tabelle beschriebene Zusammensetzung als folienartigen Beschichtung mit 250 g/m² aufextrudiert, wodurch die Tragschicht und Beschichtung untrennbar miteinander verbunden sind. Die resultierende Abdichtfolie hat eine Dicke von 0,28 mm.

### Beschichtung:

| | Gewichtsteile |
|---|---|
| S-PVC (K 70) | 34,70 |
| Weichmacher auf Phosphatbasis | 5,00 |
| Antimonflammschutzmittel | 6,36 |
| Aluminiumtrihydroxid | 5,25 |
| Polymerer Weichmacher (Polyester) | 18,02 |
| Co-Stabilisator (epoxidiertes Pflanzenöl) | 2,73 |
| Stabilisator | 1,36 |
| Verarbeitungsadditiv | 1,82 |
| Magnesiumhydroxid | 24,75 |
| Pigment | 3,09 |

Die so hergestellte Abdichtfolie konnte mittels dem SBI Test, geprüft nach EN 13823, der Brandklasse B s2,d0; schwerentflammbar eingeordnet werden und weißt somit herausragende Eigenschaften hinsichtlich des Brandschutzes auf. Des Weiteren ist die Abdichtfolie diffusionsoffen mit einem sd-Wert < 3 m. Gleichzeitig hat die Abdichtfolie auch eine hohe Bewitterungsstabilität und Wasserdichtigkeit (nicht nur gegen Schlagregen; 4 bar/72h). Neben einer hohen Flexibilität bei gleichzeitiger hoher mechanischer Stabilität, ist auch einer hervorragende Verklebbarkeit gegeben, wie mit Klebstoffen auf MS-Polymerbasis.

## Patentansprüche

1. Abdichtfolie, mit einer Tragschicht und mit einer von einer Seite aus oder von beiden Seiten aus auf die Tragschicht aufgebrachten Beschichtung, wobei die Beschichtung enthält:
a) mindestens ein Polymer, insbesondere PVC,
b) mindestens ein Flammschutzmittel auf Antimonbasis,
c) Aluminiumtrihydroxid und
d) mindestens ein weiteres Metallhydroxid, insbesondere Magnesiumhydroxid.

2. Abdichtfolie nach Anspruch 1, **dadurch gekennzeichnet, dass** die Tragschicht aus einem Polyester (PES) Gewebe ist, insbesondere mit einem Flächengewicht von 10 bis 300 g/m².

3. Abdichtfolie nach Anspruch 1 oder 2, **dadurch gekennzeichnet, dass** das mindestens eine Polymer, insbesondere PVC in der Beschichtung in einer Menge von 10 bis 70 Gew.-%, insbesondere von 15 bis 50 Gew.-% enthalten ist.

4. Abdichtfolie nach einem der Ansprüche 1 bis 3, **dadurch gekennzeichnet, dass** das Flammschutzmittel auf Antimonbasis und/oder das Aluminiumtrihydroxid in der Beschichtung in einer Menge von 1 bis 15 Gew.-%, bevorzugter von 3 bis 10 Gew.-% enthalten sind.

5. Abdichtfolie nach einem der Ansprüche 1 bis 4, **dadurch gekennzeichnet, dass** das mindestens eine weitere Metallhydroxid, insbesondere Magnesiumhydroxid in einer Menge von 1 bis 50 Gew.-%, insbesondere von 5 bis 40 Gew.-% enthalten ist.

6. Abdichtfolie nach einem der Ansprüche 1 bis 5, **dadurch gekennzeichnet, dass** die Beschichtung zudem mindestens ein Weichmacher auf Phosphatbasis, insbesondere in einer Menge von 1 bis 15 Gew.-%, bevorzugter von 3 bis 10 Gew.-% enthält

7. Abdichtfolie nach einem der Ansprüche 1 bis 6, **dadurch gekennzeichnet, dass** die Beschichtung zudem mindestens einen polymeren Weichmacher, insbesondere eine Polyolester, bevorzugt in einer Menge von 5 bis 30 Gew.-% enthält.

8. Abdichtfolie nach einem der Ansprüche 1 bis 7, **dadurch gekennzeichnet, dass** die Beschichtung
a) 15 - 50 Gew.-%, insbesondere 25 - 40 Gew.-% mindestens eines PVCs,
b) 1 - 15 Gew.-%, insbesondere 3 - 10 Gew.-% mindestens eines Antimonoxids,
c) 1 - 15 Gew.-%, insbesondere 3 - 10 Gew.-% Aluminiumtrihydroxid,
d) 5 - 40 Gew.-%, insbesondere 10 - 30 Gew.-% Magnesiumhydroxid,
e) 1 - 15 Gew.-%, insbesondere 3 - 10 Gew.-% mindestens eines Weichmachers auf Phosphatbasis,
f) optional, insbesondere 1 - 40 Gew.-% mindestens eines polymeren Weichmachers,
g) optional, insbesondere 0,5 - 10 Gew.-% mindestens eines Stabilisators und
h) optional, insbesondere 1 - 30 Gew.-% weitere Additive, wie Pigmente, Verarbeitungsadditive oder Füllstoffe enthält.

9. Abdichtfolie nach einem der Ansprüche 1 bis 8, **dadurch gekennzeichnet, dass** die Abdichtfolie eine Brandschutzwirkung von mind. B- s3, d0 nach DIN EN 13501-1 aufweist.

10. Verwendung einer Abdichtfolie gemäß einem der vorherigen Ansprüche für den Bautenschutz, insbesondere im Fassadenbereich, Dachbereich und/oder Fensterbereich.
